# EUROPÄISCHE PATENTSCHRIFT

(11) **EP 1 347 599 B1**
(45) Veröffentlichungstag und Bekanntmachung des Hinweises auf die Patenterteilung: **20.07.2005**
(21) Anmeldenummer: 02006711.2
(22) Anmeldetag: 22.03.2002
(51) Int. Cl.: H04L 12/26, H04L 29/06

(54) **Verfahren und Protokolltester zum Dekodieren gemäss einer Protokollbeschreibung kodierter Daten**
Protocol analyzer and method for decoding data based on a protocol description
Analyseur de protocole et methode de decodage de donnees a base d'une description de protocole

(43) Veröffentlichungstag der Anmeldung: 24.09.2003
(73) Patentinhaber: Tektronix Berlin GmbH & Co. KG, 13629 Berlin (DE)
(72) Erfinder: Bartsch, Wolfgang, 14057 Berlin (DE)
(74) Vertreter: Schurack, Eduard F.

(56) Entgegenhaltungen:
- EP-A- 0 332 286
- EP-A- 1 146 690
- EP-A- 1 168 712
- US-A- 6 000 041

## Beschreibung

Die vorliegende Erfindung betrifft ein Verfahren und einen Protokolltester zum Dekodieren von gemäß einer Protokollbeschreibung kodierter Daten zur Durchführung einer Messaufgabe. Sie betrifft insbesondere ein derartiges Verfahren mit den Merkmalen des Oberbegriffs von Patentanspruch 1 sowie einen Protokolltester mit den Merkmalen des Oberbegriffs von Patentanspruch 16.

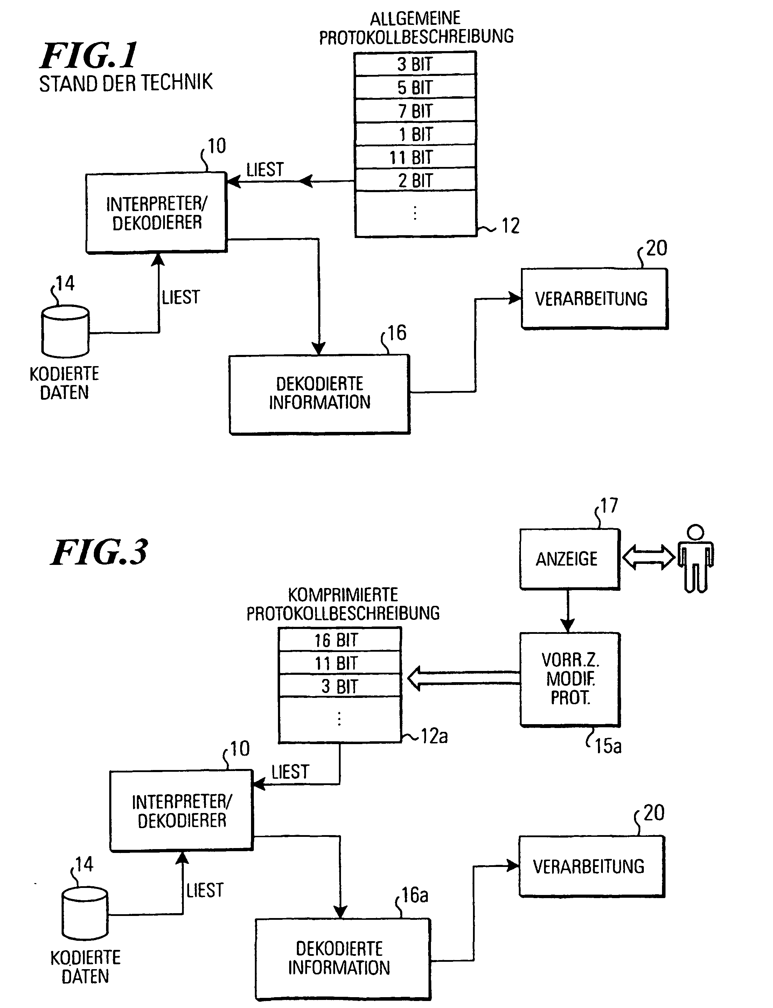

Insbesondere in der Protokollmesstechnik nimmt die Kodierung, Dekodierung und Analyse von digitalen Daten eine zentrale Rolle ein. Dabei werden sogenannte Protokolldateneinheiten durch Computersoftware untersucht und die darin enthaltenen Informationen extrahiert. Figur 1 zeigt hierzu eine aus dem Stand der Technik bekannte Vorgehensweise, bei der ein interpretativer Dekodierer 10 eine allgemeine Protokollbeschreibung liest, anhand dieser Protokollbeschreibung ebenfalls eingelesene kodierte Daten 14 dekodiert und als dekodierte Information 16 einer Verarbeitungsvorrichtung 20 bereitstellt. Diese allgemeine Protokollbeschreibung ist fest, für viele Messaufgaben geeignet und beschreibt die kodierten Daten maximal bis auf jedes Bit genau. Bevorzugt umfasst sie Informationen zur Bedeutung der Bits, den Namen von Bitgruppen, das Format der Darstellung, beispielsweise String, hexadezimal oder binär, sowie zur Bildung von Zusammenfassungen in Form von Parametern oder Messages. Im Gegensatz zu festen Dekodierroutinen, die für bestimmte Protokolle unveränderlich vorliegen, haben interpretative Dekodierroutinen, d.h. Dekodierer mit einem Interpreter, den Vorteil, dass ein und dieselbe Hardware durch Laden der entsprechenden allgemeinen Protokollbeschreibung des zugehörigen Protokolls einfach an verschiedene Protokolle angepasst werden können.

Baumstrukturierte Protokollbeschreibungen führen jedoch bei reduziertem Rechenaufwand zu einem hohen Speicherbedarf, während lineare Protokollbeschreibungen bei reduziertem Speicherbedarf zu einem erhöhten Rechenaufwand führen.

Es besteht auch die Möglichkeit, für bestimmte, sich wiederholende Messaufgaben von Hand Protokollbeschreibungen zu programmieren, wobei der Nachteil darin besteht, dass diese für eine bestimmte Messaufgabe konzipiert sind und daher zur Durchführung einer leicht modifizierten Messaufgabe bereits nicht mehr geeignet sind. Insbesondere gestaltet es sich als umständlich und zeitaufwendig, je nach zu lösender Messaufgabe, eine geeignete von Hand reduziert programmierte Protokollbeschreibung auszuwählen und in die Dekodiervorrichtung zu laden. Um beliebige Messaufgaben durchführen zu können, muss daher im Stand der Technik mit der allgemeinen Protokollbeschreibung gearbeitet werden, die, gleichgültig ob sie eine lineare Struktur oder eine Baumstruktur aufweist, zu einem hohen Rechenaufwand für den Dekodiervorgang führt.

Aus der US 6,000,041 ist bekannt, ein einziges konfigurierbares Software- oder Hardware-Modul zur Verfügung zu stellen, mit anderen Worten, eine generische Protokollbeschreibung, durch die eine Vielzahl von Protokollen dargestellt werden kann, so dass diese zu einem System hinzugefügt werden können, ohne wesentliche Änderungen des Systems oder seiner Steuerlogik zu erfordern.

Der vorliegenden Erfindung liegt deshalb die Aufgabe zugrunde, ein gattungsgemäßes Verfahren bzw. einen gattungsgemäßen Protokolltester derart weiterzubilden, dass vielfältige Messaufgaben bei geringem Zeit- und Rechenaufwand durchgeführt werden können.

Diese Aufgabe wird gelöst durch ein Verfahren mit den Merkmalen von Patentanspruch 1 und einen Protokolltester mit den Merkmalen von Patentanspruch 16.

Der Erfindung liegt die Erkenntnis zugrunde, dass die obige Aufgabe dadurch gelöst werden kann, dass die ursprüngliche allgemeine Protokollbeschreibung zum Konfigurationszeitpunkt der Messaufgabe zumindest teilweise automatisch modifiziert wird. Die Modifikation spiegelt die Interessenlage, das heißt die im Hinblick auf die Messaufgabe zu dekodierenden Protokollelemente, wider. Unter Konfigurationszeitpunkt ist der Zeitpunkt zu verstehen, an dem alle für die Messaufgaben notwendigen Teile der Protokollbeschreibung festgelegt worden sind, die von der Dekodiervorrichtung zur Lösung der Messaufgabe als Ausgangssignal geliefert werden müssen.

Durch die Erfindung ergibt sich weiterhin der Vorteil, dass nur allgemeine Protokollbeschreibungen im Protokolltester abgelegt werden müssen, da die im Hinblick auf eine spezielle Messaufgabe optimierten Protokollbeschreibungen nur temporär zu speichern sind und durch entsprechende Eingabe ohne großen Aufwand aus der jeweiligen allgemeinen Protokollbeschreibung wieder kreiert werden können. Im Gegensatz hierzu mussten in dem oben erwähnten Stand der Technik, bei dem reduzierte Protokollbeschreibungen bereitgestellt sind, eine Vielzahl davon im Protokolltester bereitgehalten werden, da eine Modifikation dieser Protokollbeschreibungen im Hinblick auf eine aktuelle Messaufgabe nicht vorgesehen war. Daraus ergibt sich eine große Ersparnis an Speicherbedarf. Bei einem vorhandenen Speichermedium kann dieses dann dafür genutzt werden, Protokollbeschreibungen verschiedenster anderer Protokolle in ein und demselben Protokolltester bereitzuhalten, um dessen Universalität zu vergrößern. Durch die Erfindung wird es ermöglicht, ein und denselben Protokolltester bei optimiertem Rechenaufwand für verschiedenste Protokolle einsetzbar zu machen und dennoch die Durchführung von Messaufgaben in sehr kurzer Zeit zu garantieren.

Bei optimaler Modifikation der allgemeinen Protokollbeschreibung lässt sich der Rechenaufwand für die Dekodierung auf das unbedingt notwendige Maß reduzieren. Die modifizierte Protokollbeschreibung wird insbesondere nur temporär zur Durchführung einer bestimmten Messaufgabe in dem Protokolltester gespeichert, während die allgemeine Protokollbeschreibung unverändert bleibt und für andere Messaufgaben beziehungsweise andere Konfigurationen erneut zur Modifikation verwendet werden kann.

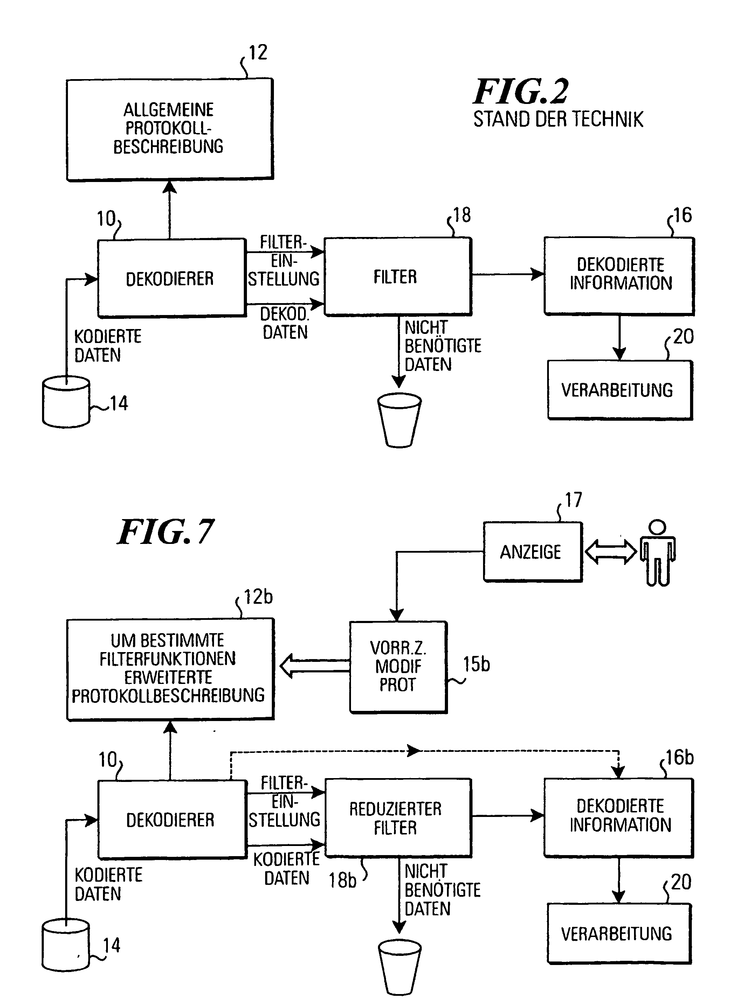

Zur Erklärung der Vorzüge einer bevorzugten Ausführungsform wird auf Figur 2 Bezug genommen, die Elemente eines aus dem Stand der Technik bekannten Protokolltesters zeigt, wobei, dies gilt für alle Figuren, in den Figuren für gleiche oder vergleichbare Elemente gleiche Bezugszeichen verwendet werden. Bei dem in Figur 2 dargestellten Protokolltester ist dem Dekodierer 10 ein Filter 18 nachgeschaltet, wobei der Dekodierer 10 zum einen dekodierte Daten an das Filter 18 überträgt, zum anderen Information zur Filtereinstellung. Im Filter 18 werden nicht benötigte Daten, das heißt Daten, die der mindestens einen im Filter 18 eingestellten Filterbedingung nicht genügen, verworfen. Die die mindestens eine Filterbedingung erfüllenden Daten werden als dekodierte Information 16 einer Verarbeitungsvorrichtung 20 bereitgestellt.

Bei dieser Variante kann erfindungsgemäß der Rechenaufwand dadurch minimiert werden, dass in Schritt a) die Protokollbeschreibung durch Einbau mindestens einer der mindestens einen Filterbedingung in die Protokollbeschreibung modifiziert wird. Diese Variante basiert auf der Erkenntnis, dass im Stand der Technik der Dekodierer die Protokollbeschreibung abarbeitet, unabhängig davon, ob bereits ein Protokollelement dekodiert worden ist, welches die mindestens eine Filterbedingung nicht erfüllt, und als Hinweis zu werten ist, daß eine ganze Reihe davon abhängiger Folgedekodierungen nicht mehr nötig sind. Das heißt, dass bestimmte Daten von weiteren Dekodierungen ausgeschlossen werden können, da sie für die aktuelle Messaufgabe nicht von Bedeutung sind, was wiederum bedeutet, daß im Stand der Technik der Dekodiervorgang fortgesetzt und damit der Rechenaufwand unnötig erhöht wird, obwohl er tatsächlich nicht notwendig ist.

Bei dieser Ausführungsform der Erfindung wird demnach ein Teil der im Stand der Technik in der Filtervorrichtung 18 abgelegten Filterbedingungen zur Modifikation der Protokollbeschreibung 12 verwendet. Die Filterung findet demnach einerseits bereits durch die modifizierte Protokollbeschreibung, andererseits durch eine modifizierte Filtervorrichtung mit reduziertem Filterumfang statt.

Weiter bevorzugt kann daher vorgesehen werden, dass in Schritt c) beim Feststellen, dass die mindestens eine Filterbedingung nicht erfüllt ist, der Teil der modifizierten Protokollbeschreibung nicht abgearbeitet wird, der nur bei Erfüllung dieser mindestens einen Filterbedingung von Relevanz wäre. Dadurch lässt sich erhebliche Rechenzeit einsparen.

In Schritt d) kann zumindest eine Teilmenge der Daten für die Überprüfung mindestens einer weiteren Filterbedingung an die Filtervorrichtung geleitet werden. Alternativ oder zusätzlich kann in Schritt d) zumindest eine Teilmenge der Daten unter Umgehung der Filtervorrichtung direkt an die Verarbeitungsvorrichtung geleitet werden. Die letztgenannte Maßnahme ist besonders dann zu bevorzugen, wenn feststeht, dass diese Daten, die die mindestens eine Filterbedingung erfüllen, in der Filtervorrichtung keiner weiteren Filterung mehr unterworfen werden.

Weiterhin kann vorgesehen werden, dass in Schritt a) ein Sprungbefehl in die Protokollbeschreibung eingebaut wird, der bei Nicht-Erfülltsein der mindestens einen Filterbedingung auszuführen ist, wobei der Sprungbefehl derart formuliert ist, dass zumindest der nachfolgende, im Hinblick auf die nicht-erfüllte Filterbedingung unrelevante Teil der modifizierten Protokollbeschreibung übersprungen wird.

Eine Modifikation der Protokollbeschreibung gemäß Schritt a) kann daher zu einer Komprimierung im Hinblick auf die zu ihrer Ausführung nötige Zeit und/oder zu ihrer Ausführung nötigen Rechenschritte führen.

Eine Komprimierung der Protokollbeschreibung kann insbesondere durch einen oder mehrere der folgenden Schritte erfolgen:
- Zusammenfassen von Protokollelementen der Protokollbeschreibung, die im Hinblick auf die Messaufgabe nicht von Relevanz sind; und/oder
- Zusammenfassen von Abhängigkeiten und/oder Bedingungen; und/oder
- Einfügen mindestens eines Sprungbefehls in die Protokollbeschreibung, wobei der Sprungbefehl derart formuliert ist, dass zumindest ein nachfolgender, im Hinblick auf die Messaufgabe unrelevanter Teil der Protokollbeschreibung übersprungen wird; und/oder
- Einfügen eines Abbruchbefehls für den Fall, dass alle Protokollelemente der Protokollbeschreibung von Relevanz dekodiert worden sind.

Die Modifikation der Protokollbeschreibung kann automatisch, insbesondere zum Konfigurationszeitpunkt der Messaufgabe erfolgen, beispielsweise dadurch, dass durch Auswahl einer bestimmten Messaufgabe, beispielsweise durch ein auf einem Bildschirm dargestelltes Auswahlmenü, durch eine Bedienperson eine entsprechende Modifikation der allgemeinen Protokollbeschreibung vollautomatisch von einer Vorrichtung zur Modifikation der Protokollbeschreibung, die im Protokolltester angeordnet ist, durchgeführt wird. Die Vorrichtung zur Modifikation der Protokollbeschreibung führt hierbei folgende Teilschritte aus: Zunächst wird die Messaufgabe analysiert, anschlie-ßend werden aufgrund von der in der Protokollbeschreibung beschriebenen Abhängigkeiten die im Hinblick auf die Messaufgabe relevanten Teile der Protokollbeschreibung festgelegt und schließlich wird die Protokollbeschreibung modifiziert durch Einbau von einem oder mehreren der oben erwähnten Teilschritte.

Im Hinblick auf die erfindungsgemäße Modifikation der Filterung kann die automatische Modifikation der Protokollbeschreibung alternativ oder zusätzlich folgende Teilschritte umfassen: Zunächst Analyse der Messaufgabe, anschließend Ermittlung von mindestens einer Filterbedingung, um die die Protokollbeschreibung zu erweitern ist und schließlich Modifizieren der Protokollbeschreibung durch Einbau der zuvor ermittelten mindestens einen Filterbedingung in die Protokollbeschreibung.

Der Modifikation der Protokollbeschreibung kann ein Auswahlschritt für mindestens eine Messaufgabe vorhergehen, beispielsweise indem einer Bedienperson ein Katalog von Messaufgaben auf einem Anzeigemedium bereitgestellt wird, aus denen sie auswählen kann. Der Auswahlschritt erfolgt besonders bevorzugt dialoggesteuert, insbesondere durch Eingabe von Spezifikationen der Messaufgabe durch eine Bedienperson in dafür vorgesehene Eingabefenster, beispielsweise als Antwort auf eine Abfrage, und/oder durch Auswahl aus einem bereitgestellten Auswahlmenü.

Besonders vorteilhaft ist es, wenn die modifizierte Protokollbeschreibung insbesondere temporär zur Durchführung der Messaufgabe in dem Protokolltester gespeichert wird, während die ursprüngliche allgemeine Protokollbeschreibung dauerhaft darin gespeichert ist, um sie im Hinblick auf die Durchführung anderer Messaufgaben geeignet zu modifizieren. Selbstverständlich können in den Protokolltester allgemeine Protokollbeschreibungen verschiedener Übertragungsprotokolle abgelegt sein, so dass sich ein großes Einsatzgebiet für einen Protokolltester ergibt.

Es kann weiterhin vorgesehen werden, dass im Hinblick auf häufig wiederkehrende Messaufgaben diese nicht immer wieder erneut dialoggesteuert von einer Bedienperson spezifiziert werden müssen, sondern dass beispielsweise unter Zuweisung eines wahlfreien Namens die Messaufgabe und/oder die zugehörige modifizierte Protokollbeschreibung im Protokolltester abgespeichert werden können, so dass sie bei Bedarf wieder aufgerufen werden können.

Die im Zusammenhang mit dem erfindungsgemäßen Verfahren beschriebenen bevorzugten Ausführungsformen gelten, wie für den Fachmann offensichtlich, selbstverständlich auch für den erfindungsgemäßen Protokolltester, wobei erfindungsgemäße Verfahrensschritte durch entsprechende Vorrichtungen im Protokolltester realisiert sind, ohne an dieser Stelle nochmals im Detail darauf einzugehen.

Weitere vorteilhafte Ausführungsformen sind den Unteransprüchen zu entnehmen.

Im Nachfolgenden werden nunmehr Ausführungsbeispiele der Erfindung unter Beugnahme auf die beigefügten Zeichnungen näher beschrieben. Es zeigen:
- Figur 1: in schematischer Darstellung das Zusammenwirken von Elementen eines aus dem Stand der Technik bekannten Protokolltesters;
- Figur 2: in schematischer Darstellung das Zusammenwirken von Elementen eines aus dem Stand der Technik bekannten zweiten Protokolltesters;
- Figur 3: eine erfindungsgemäße Weiterbildung des in Figur 1 dargestellten Protokolltesters;
- Figur 4: eine beispielhafte Messaufgabe;
- Figur 5a: eine Sequenz der Protokollbeschreibung zur Durchführung der Messaufgabe von Figur 4 mit einem Protokolltester gemäß Figur 1;
- Figur 5b: die zur Figur 5a zugehörigen Dekodierergebnisse;
- Figur 6a: die zur Lösung der Messaufgabe von Figur 4 nötige modifizierte Protokollbeschreibung bei Verwendung eines Protokolltesters gemäß Figur 3;
- Figur 6b: das zur Protokollbeschreibung von Figur 6a zugehörige Dekodierergebnis;
- Figur 7: eine erfindungsgemäße Weiterbildung des aus dem Stand der Technik bekannten, in Figur 2 dargestellten Protokolltesters;
- Figur 8: eine beispielhafte Filterbedingung;
- Figur 9a: die bei einem Protokolltester gemäß Figur 2 abzuarbeitende Protokollbeschreibung zum Dekodieren der Daten;
- Figur 9b: das zu Figur 9a zugehörige Dekodierergebnis;
- Figur 9c: der sich nach dem Dekodiervorgang anschließende Filterschritt, um die Filterbedingung von Figur 8 mit dem Protokolltester von Figur 2 durchzuführen;
- Figur 10a: die bei einem erfindungsgemäßen Protokolltester gemäß Figur 7 abzuarbeitende modifizierte Protokollbeschreibung; und
- Figur 10b: das zur modifizierten Protokollbeschreibung von Figur 10a zugehörige Ergebnis.

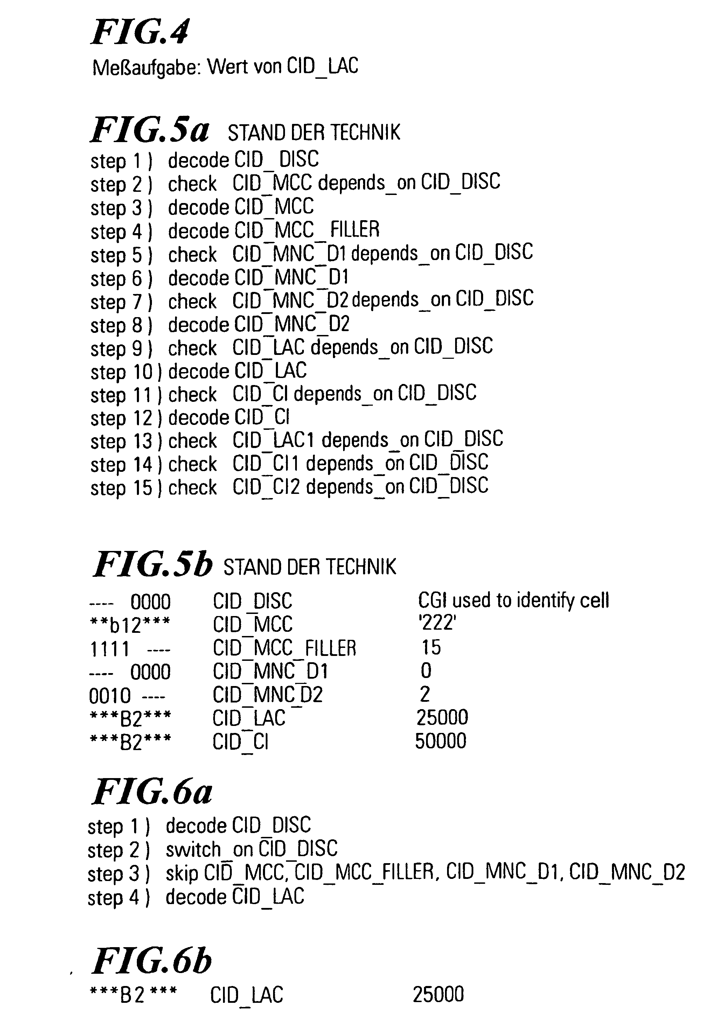

Figur 3 zeigt eine erste Ausführungsform eines erfindungsgemäßen Protokolltesters, der eine komprimierte Protokollbeschreibung abarbeitet, wobei im Hinblick auf die durchzuführende Messaufgabe Protokollelemente der Protokollbeschreibung, die im Hinblick auf die Messaufgabe nicht von Relevanz sind, zusammengefasst wurden, beziehungsweise Abhängigkeiten und/oder Bedingungen zusammengefasst wurden, beziehungsweise Sprungbefehle in die Protokollbeschreibung eingefügt wurden, wobei die Sprungbefehle derart formuliert sind, dass zumindest der nachfolgende, im Hinblick auf die Messaufgabe unrelevante Teil der Protokollbeschreibung übersprungen wird, beziehungsweise ein Abbruchbefehl an einer Stelle der Protokollbeschreibung eingefügt wurde für den Fall, dass feststeht, daß bereits alle Protokollelemente der Protokollbeschreibung von Relevanz dekodiert worden sind. Im Vergleich mit Figur 1 fällt auf, dass in Figur 3 in der Protokollbeschreibung die ersten vier Protokollelemente, da für die beispielhaft angenommene Messaufgabe ohne Relevanz, zusammengefasst worden sind. Diese Komprimierung der Protokollbeschreibung wird erfindungsgemäß ausgeführt von einer Vorrichtung 15a zur Modifikation der Protokollbeschreibung. Dazu wird einer Bedienperson auf einer Anzeige 17, beispielsweise einem Computerbildschirm, ein Auswahlmenü angezeigt, in dem er durch entsprechende Auswahl und Eingabe eine Messaufgabe spezifizieren kann. Im Hinblick auf die Auswahl und Eingabe der Bedienperson modifiziert die Vorrichtung 15a zur Modifikation der Protokollbeschreibung die allgemeine Protokollbeschreibung 12 zur komprimierten Protokollbeschreibung 12a. Der Dekodierer 10, der die komprimierte Protokollbeschreibung 12a liest, stellt, wie sich in dem unten detaillierter dargestellten Ausführungsbeispiel noch deutlicher ergibt, eine dekodierte Information 16a an die Verarbeitungseinheit 20 bereit.

Die im Zusammenhang mit den Figuren 4, 5, 6, 8, 9, 10 benutzen Dekodierer-Befehle haben folgende Bedeutungen:
- check -: prüfe die Abhängigkeit zu anderem Protokolldatenelement;
- decode -: dekodiere das Protokolldatenelement;
- skip -: positioniere den Dekodierer im Datenstrom;
- switch_on -: positioniere den Dekodierer in der Protokollbeschreibung.

In Figur 4 ist als Beispiel für eine charakteristische Messaufgabe die Bestimmung eines Cell Identifier-Parameters "CID_LAC" angegeben. Bei dem in Figur 1 dargestellten, aus dem Stand der Technik bekannten Protokolltester wird eine allgemeine Protokollbeschreibung abgearbeitet, die in Figur 5a dargestellt ist. Mit einem jeweiligen "Decode"-Befehl wird ein jeweiliges Protokolldatenelement aus dem Datenstrom dekodiert (siehe dazu auch die Dekodierergebnisse in Figur 5b), während ein "Check"-Befehl einen bedingten Datenzugriff darstellt, der von dem Wert oder Vorhandensein eines anderen Protokolldatenelements abhängt. Wie deutlich zu erkennen, wird der Parameterwert von CID_LAC in Schritt 10 bestimmt. Obwohl CID_LAC nur direkt von CID_DISC abhängt, ist die Bestimmung der anderen von CID_DISC abhängigen Parameter nötig, um im Datenstrom die richtige Position von CID_LAC zu bestimmen. Allerdings sind die zugehörigen Dekodierbefehle ("decode") unnötig, da der tatsächliche Parameterwert ohne Interesse ist, vielmehr lediglich von Bedeutung ist, ob er vorhanden ist oder nicht. Letzteres wird durch den entsprechenden "Check"-Befehl bestimmt. Daher werden vorliegend die Schritte 3, 4, 6, 8, 11, 12, 13, 14 und 15 durchgeführt, obwohl diese im Hinblick auf die Messaufgabe ohne Relevanz sind.

Figur 5b zeigt das zugehörige Dekodierergebnis, wobei ganz links die entsprechende Bit-Maske dargestellt ist, in der zweiten Spalte der Name des Protokolldatenelements und in der rechten Spalte die Bedeutung des Protokolldatenelements.

Figur 6a zeigt die zur Lösung der Messaufgabe von Figur 4 zugehörige modifizierte Protokollbeschreibung mit der ein erfindungsgemäßer Protokolltester gemäß Figur 3 arbeitet. In Schritt 1 wird CID_DISC dekodiert. In Schritt 2 wird entsprechend dem dekodierten Wert von CID_DISC ein Sprungbefehl ausgeführt, der den Dekodierer in der Protokollbeschreibung positioniert. In Schritt 3 wird eine Positionierung des Dekodierers im Datenstrom durchgeführt. Schließlich wird im Schritt 4 der interessierende Parameter CID_LAC dekodiert und als einziges Dekodierergebnis bereitgestellt, siehe Figur 6b.

Aus diesem Beispiel geht deutlich hervor, dass der interpretative Rechenaufwand durch die Erfindung gegenüber dem Stand der Technik deutlich reduziert werden konnte.

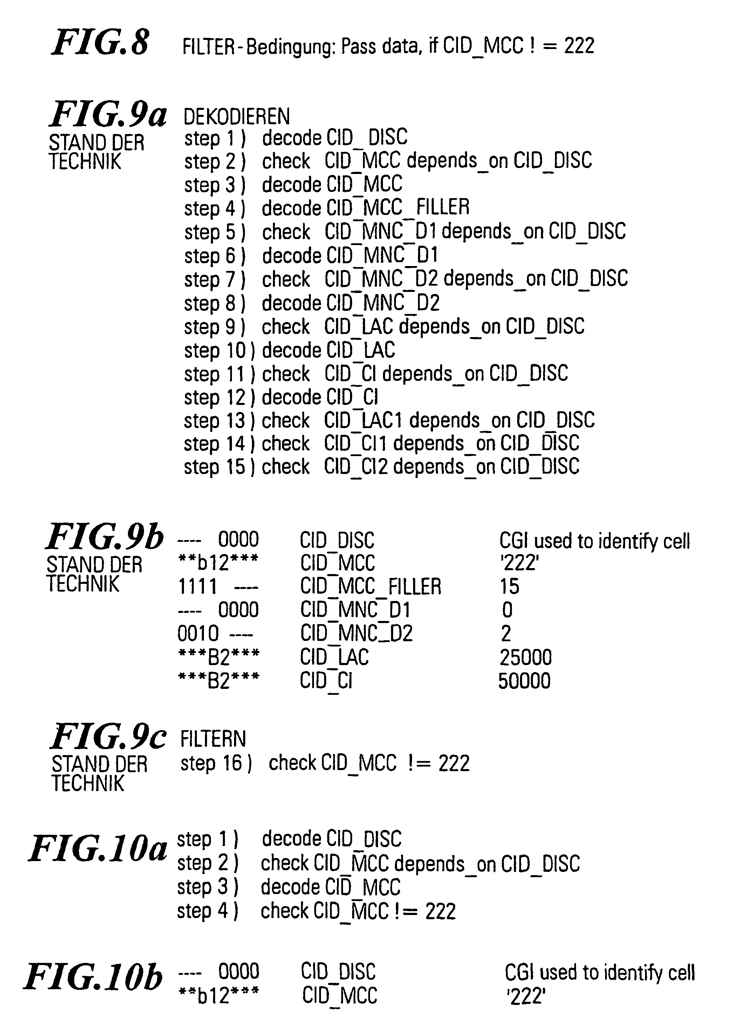

Figur 7 zeigt einen erfindungsgemäßen Protokolltester, der gegenüber dem aus dem Stand der Technik bekannten, in Figur 2 dargestellten, Protokolltester dahingehend weitergebildet wurde, dass ein Teil der ursprünglichen in der Filtervorrichtung 18 vorgesehenen Filterfunktion in die Protokollbeschreibung 12b aufgenommen wurde, die vom Dekodierer 10 gelesen wird. Zur Durchführung der Modifikation wird eine Vorrichtung 15b zur Modifikation der Protokollbeschreibung verwendet, die sinngemäß wie die bereits im Zusammenhang mit Figur 3 erwähnte Vorrichtung 15a funktioniert und ebenfalls mit einer Anzeigevorrichtung 17 zusammenwirkt. Als Konsequenz ist nunmehr eine reduzierte Filtervorrichtung 18b vorhanden. Das im Folgenden mit Bezug auf die Figuren 8 bis 10b beschriebene Beispiel soll die Vorzüge der Erfindung im Vergleich zum Stand der Technik deutlich darstellen:

Figur 8 zeigt die Filterbedingung, die darin besteht, Daten durchzulassen, wenn die Protokolldateneinheit CIC_MCC ungleich 222 ist.

Figur 9a zeigt die zugehörigen Dekodierschritte, die bei einem Protokolltester nach Figur 2 ausgeführt werden, wobei dies die selben Dekodierschritte sind, wie in Figur 5a dargestellt. Weiterhin zeigt Figur 9b das zugehörige Dekodierergebnis, das dem von Figur 5b entspricht. Gemäß Figur 9c schließt sich ein Filterschritt an, in dem geprüft wird, ob CIC_MCC ungleich 222 ist. Wie aus der Abfolge zu erkennen, wird der Wert von CIC_MCC bereits in Schritt 3 von Figur 9a bestimmt, wobei im vorliegenden Fall CIC_MCC gleich 222 ist und demnach, siehe Filterbedingung von Figur 8, die nachfolgenden Daten ohne Relevanz im Hinblick auf die zu lösende Messaufgabe sind. Zumindest die Schritte 4 bis 15 werden daher in unnötiger Weise ausgeführt.

Figur 10a zeigt eine in erfindungsgemäßer Weise modifizierte Protokollbeschreibung, bei der bereits im Schritt 4 der Wert von CIC_MCC bestimmt wird. Da sich bei diesem Beispiel ergibt, dass CIC_MCC gleich 222 ist, sind die nachfolgenden Daten durchzulassen, die Bearbeitung kann an der Stelle abgebrochen werden. Figur 10b zeigt das zur modifizierten Protokollbeschreibung von Figur 10a zugehörige Ergebnis.

Wie an diesem Beispiel gezeigt werden konnte, lässt sich durch die Erfindung der Rechenaufwand durch Ausschluss von Daten von der weiteren Verarbeitung deutlich reduzieren.

Selbstverständlich können die in den Figuren 3 und 7 dargestellten Ausführungsformen miteinander kombiniert werden.

## Patentansprüche

1. Verfahren zum Dekodieren von gemäß einer Protokollbeschreibung (12) kodierten Daten (14) in einem Protokolltester zur Durchführung einer Meßaufgabe, wobei der Protokolltester einen Eingang für die Einspeisung von Daten, eine Dekodiervorrichtung zum Dekodieren der Daten und eine Verarbeitungsvorrichtung (20) für die dekodierten Daten (16) aufweist, **gekennzeichnet durch** folgende Schritte:
a) Modifizieren der Protokollbeschreibung im Hinblick auf die Meßaufgabe mittels einer Vorrichtung zum zumindest teilweise automatischen Modifizieren der Protokollbeschreibung (15a, 15b);
b) Einspeisen von Daten in die Dekodiervorrichtung (10);
c) Dekodieren der Daten in der Dekodiervorrichtung (10) **durch** Abarbeitung der modifizierten Protokollbeschreibung (12a, 12b);
d) Weiterverarbeitung des Ausgangssignals der Dekodiervorrichtung (10) in der Verarbeitungsvorrichtung (20).

2. Verfahren nach Anspruch 1,
**dadurch gekennzeichnet,**
**daß** der Protokolltester weiterhin eine Filtervorrichtung (18b) umfaßt, in der mindestens eine Filterbedingung geprüft wird, wobei das Ausgangssignal der Filtervorrichtung (18b) der Verarbeitungsvorrichtung (20) zuführbar ist, und in Schritt a) die Protokollbeschreibung durch Einbau mindestens einer der mindestens einen Filterbedingung in die Protokollbeschreibung (12, 12a) modifiziert wird.

3. Verfahren nach Anspruch 2,
**dadurch gekennzeichnet,**
**daß** in Schritt c) beim Feststellen, daß die mindestens eine Filterbedingung nicht erfüllt ist, durch Modifikation der Teil der Protokollbeschreibung (12, 12a) nicht abgearbeitet wird, der nur bei Erfüllung dieser mindestens einen Filterbedingung von Relevanz wäre.

4. Verfahren nach einem der Ansprüche 2 oder 3,
**dadurch gekennzeichnet,**
**daß** in Schritt d) zumindest eine Teilmenge der Daten für die Überprüfung mindestens einer weiteren Filterbedingung an die Filtervorrichtung (18b) geleitet wird.

5. Verfahren nach einem der Ansprüche 2 bis 4,
**dadurch gekennzeichnet,**
**daß** in Schritt d) zumindest eine Teilmenge der Daten unter Umgehung der Filtervorrichtung (18b) an die Verarbeitungsvorrichtung (20) geleitet wird.

6. Verfahren nach einem der Ansprüche 2 bis 5,
**dadurch gekennzeichnet,**
**daß** in Schritt a) ein Sprungbefehl in die Protokollbeschreibung eingebaut wird, der bei Nicht-Erfülltsein der mindestens einen Filterbedingung auszuführen ist, wobei der Sprungbefehl derart formuliert ist, daß zumindest der nachfolgende, im Hinblick auf die nicht-erfüllte Filterbedingung unrelevante Teil der Protokollbeschreibung (12, 12a) übersprungen wird.

7. Verfahren nach einem der vorhergehenden Ansprüche,
**dadurch gekennzeichnet,**
**daß** in Schritt a) die Protokollbeschreibung (12, 12a) im Hinblick auf die zu ihrer Ausführung nötige Zeit und/oder zu ihrer Ausführung nötigen Rechenschritte komprimiert wird.

8. Verfahren nach Anspruch 7,
**dadurch gekennzeichnet,**
**daß** die Protokollbeschreibung (12, 12a) komprimiert wird durch einen oder mehrere der folgenden Schritte:
- Zusammenfassen von Protokollelementen der Protokollbeschreibung, die im Hinblick auf die Meßaufgabe nicht von Relevanz sind; und/oder
- Zusammenfassen von Abhängigkeiten und/oder Bedingungen; und/ oder
- Einfügen mindestens eines Sprungbefehls in die Protokollbeschreibung, wobei der Sprungbefehl derart formuliert ist, daß zumindest ein nachfolgender, im Hinblick auf die Meßaufgabe unrelevanter Teil der Protokollbeschreibung übersprungen wird; und/oder
- Einfügen eines Abbruchbefehls, für den Fall, daß alle Protokollelemente der Protokollbeschreibung von Relevanz dekodiert worden sind.

9. Verfahren nach einem der vorhergehenden Ansprüche,
**dadurch gekennzeichnet,**
**daß** die Modifikation der Protokollbeschreibung (12, 12a, 12b) automatisch, insbesondere zum Konfigurationszeitpunkt der Meßaufgabe, erfolgt.

10. Verfahren nach Anspruch 9,
**dadurch gekennzeichnet,**
**daß** die automatische Modifikation der Protokollbeschreibung folgende Teilschritte umfaßt:
a1) Analyse der Meßaufgabe;
a2) Festlegen aufgrund von in der Protokollbeschreibung beschriebenen Abhängigkeiten der im Hinblick auf die Meßaufgabe relevanten Teile der Protokollbeschreibung;
a3) Modifizieren der Protokollbeschreibung durch Ausführung von einem oder mehreren der Teilschritte von Patentanspruch 8.

11. Verfahren nach Anspruch 9,
**dadurch gekennzeichnet,**
**daß** die automatische Modifikation der Protokollbeschreibung folgende Teilschritte umfaßt:
a1) Analyse der Meßaufgabe;
a2) Ermitteln von mindestens einer Filterbedingung, um die die Protokollbeschreibung zu erweitern ist;
a3) Modifizieren der Protokollbeschreibung durch Einbau der in Schritt a2) ermittelten mindestens einen Filterbedingung in die Protokollbeschreibung.

12. Verfahren nach einem der vorhergehenden Ansprüche,
**dadurch gekennzeichnet,**
**daß** der Modifikation der Protokollbeschreibung ein Auswahlschritt für mindestens eine Meßaufgabe vorhergeht.

13. Verfahren nach Anspruch 12,
**dadurch gekennzeichnet,**
**daß** der Auswahlschritt dialoggesteuert erfolgt, insbesondere durch Eingabe von Spezifikationen der Meßaufgabe durch eine Bedienperson in ein Auswahlmenü.

14. Verfahren nach einem der vorhergehenden Ansprüche,
**dadurch gekennzeichnet,**
**daß** die modifizierte Protokollbeschreibung insbesondere temporär zur Durchführung der Meßaufgabe und die ursprüngliche Protokollbeschreibung dauerhaft, um sie im Hinblick auf die Durchführung anderer Meßaufgaben zu modifizieren, in dem Protokolltester gespeichert werden.

15. Verfahren nach Anspruch 14,
**dadurch gekennzeichnet,**
**daß** die modifizierte Protokollbeschreibung dauerhaft in dem Protokolltester gespeichert wird.

16. Protokolltester zum Dekodieren gemäß einer Protokollbeschreibung (12) kodierter Daten (14) zur Durchführung einer Meßaufgabe, wobei der Protokolltester einen Eingang für die Einspeisung von Daten (14), eine Dekodiervorrichtung (10) zum Dekodieren der Daten und eine Verarbeitungsvorrichtung (20) für die dekodierten Daten aufweist,
**dadurch gekennzeichnet,**
**daß** der Protokolltester weiterhin eine Vorrichtung (15a, 15b) zum zumindest teilweise automatischen Modifizieren der Protokollbeschreibung im Hinblick auf die Meßaufgabe umfaßt, wobei die Dekodiervorrichtung (10) ausgelegt ist, die Daten (14) durch Abarbeitung der modifizierten Protollbeschreibung (12a) zu dekodieren.

## Claims

1. Method of decoding data (14) encoded according to a protocol description (12) in a protocol analyzer for performing a measurement task, wherein the protocol analyzer has an input for feeding data, a decoding device for decoding the data and a processing device (20) for the decoded data (16), **characterized by** the following steps:
a) modifying the protocol description with regard to the measurement task by means of a device for at least partially automatically modifying the protocol description (15a, 15b);
b) feeding data into the decoding device (10);
c) decoding the data in the decoding device (10) by running the modified protocol description (12a, 12b);
d) further processing the output signal of the decoding device (10) in the processing device (20).

2. Method according to claim 1,
**characterized in that**
the protocol analyzer further includes a filter device (18b), in which at least one filter condition is tested, wherein the output signal of the filter device (18b) can be provided to the processing device (20), and in step a) the protocol description is modified by incorporation of at least one of the at least one filter condition into the protocol description (12, 12a).

3. Method according to claim 2,
**characterized in that**
in step c), in determining that the at least one filter condition is not satisfied, by modification, the portion of the protocol description (12, 12a) is not run, which would be only relevant upon satisfaction of this at least one filter condition.

4. Method according to any one of claims 2 or 3,
**characterized in that**
in step d) at least a subset of the data is passed to the filter device (18b) for verification of at least one further filter condition.

5. Method according to any one of claims 2 to 4,
**characterized in that**
in step d) at least a subset of the data is passed to the processing device (20) with bypassing the filter device (18b).

6. Method according to any one of claims 2 to 5,
**characterized in that**
in step a) a jump instruction is incorporated into the protocol description, which is to be executed upon non-satisfaction of the at least one filter condition, wherein the jump instruction is formulated such that at least the subsequent portion of the protocol description (12, 12a) irrelevant with regard to the non-satisfied filter condition is skipped.

7. Method according to any one of the preceding claims,
**characterized in that**
in step a) the protocol description (12, 12a) is compressed with regard to the time required for its execution and/or the computational steps required for its execution.

8. Method according to claim 7,
**characterized in that**
the protocol description (12, 12a) is compressed by one or more of the following steps:
- combining protocol elements of the protocol description not relevant with regard to the measurement task; and/or
- combining dependencies and/or conditions; and/or
- inserting at least one jump instruction into the protocol description, wherein the jump instruction is formulated such that at least a subsequent portion of the protocol description irrelevant with regard to the measurement task is skipped; and/or
- inserting an abort instruction in case all of the relevant protocol elements of the protocol description have been decoded.

9. Method according to any one of the preceding claims,
**characterized in that**
the modification of the protocol description (12, 12a, 12b) is effected automatically, especially at the time of configuration of the measurement task.

10. Method according to claim 9,
**characterized in that**
the automatic modification of the protocol description includes the following substeps:
a1) analyzing the measurement task;
a2) determining the portions of the protocol description relevant with regard to the measurement task due to dependencies described in the protocol description;
a3) modifying the protocol description by executing one or more of the substeps of claim 8.

11. Method according to claim 9,
**characterized in that**
the automatic modification of the protocol description includes the following substeps:
a1) analyzing the measurement task;
a2) determining at least one filter condition by which the protocol description is to be expanded;
a3) modifying the protocol description by incorporation the at least one filter condition determined in step a2) into the protocol description.

12. Method according to any one of the preceding claims,
**characterized in that**
a selection step for at least one measurement task precedes the modification of the protocol description.

13. Method according to claim 12,
**characterized in that**
the selection step is effected interactively controlled, especially by entering specifications of the measurement task by an operator into a selection menu.

14. Method according to any one of the preceding claims,
**characterized in that**
in the protocol analyzer, there are stored the modified protocol description, especially temporarily for performing the measurement task, and the original protocol description permanently in order to modify it with regard to the performance of other measurement tasks.

15. Method according to claim 14,
**characterized in that**
the modified protocol description is permanently stored in the protocol analyzer.

16. Protocol analyzer for decoding data (14) encoded according to a protocol description (12) for performing a measurement task, the protocol analyzer having an input for feeding data (14), a decoding device (10) for decoding the data and a processing device (20) for the decoded data,
**characterized in that**
the protocol analyzer further includes a device (15a, 15b) for at least partially automatically modifying the protocol description with regard to the measurement task, wherein the decoding device (10) is configured to decode the data (14) by running the modified protocol description (12a).

## Revendications

1. Procédé de décodage de données (14) codées à base d'une description de protocole (12) dans un analyseur de protocole destiné à remplir une tâche de mesure, l'analyseur de protocole comprenant une entrée pour l'introduction de données, un dispositif de décodage prévu de décoder les données ainsi qu'un dispositif de traitement (20) des données décodées (16), **caractérisé par** les étapes suivantes:
a) modification de la description de protocole en vue de la tâche de mesure au moyen d'un dispositif de modification au moins partiellement automatique de la description de protocole (15a, 15b);
b) introduction de données dans le dispositif de décodage (10);
c) décodage des données dans le dispositif de décodage (10) par exécution séquentielle de la description de protocole modifiée (12a, 12b);
d) traitement continu du signal de sortie du dispositif de décodage (10) dans le dispositif de traitement (20).

2. Procédé selon la revendication 1, **caractérisé en ce que** l'analyseur de protocole comprend par ailleurs un dispositif de filtrage (18b) dans lequel au moins une condition de filtrage est vérifiée, le signal de sortie du dispositif de filtrage (18b) étant apte à être appliqué au dispositif de traitement (20), la description de protocole étant modifiée à l'étape a) par insertion d'au moins l'une des au moins une condition(s) de filtrage dans la description de protocole (12, 12a).

3. Procédé selon la revendication 2, **caractérisé en ce qu'**à l'étape c), lors de la détection que l'au moins une condition de filtrage n'est pas remplie, celle des parties de la description de protocole (12, 12a) n'est pas exécutée par modification qui ne serait pertinente qu'en cas de remplissement de ladite au moins une condition de filtrage.

4. Procédé selon l'une des revendications 2 ou 3, **caractérisé en ce qu'**à l'étape d), au moins une quantité partielle des données est appliquée au dispositif de filtrage (18b) pour la vérification d'au moins une condition de filtrage supplémentaire.

5. Procédé selon l'une des revendications 2 à 4, **caractérisé en ce qu'**à l'étape d), au moins une quantité partielle des données est appliquée au dispositif de traitement (20) en contournant le dispositif de filtrage (18b).

6. Procédé selon l'une des revendications 2 à 5, **caractérisé en ce qu'**à l'étape a), une instruction de saut est insérée dans la description de protocole prévue d'être exécutée lors dun non-remplissement de l'au moins une condition de filtrage, l'instruction de saut étant formulée de façon à ce qu'au moins la partie suivante, non pertinente en vue de la condition de filtrage non remplie de la description de protocole (12, 12a) soit omise.

7. Procédé selon l'une des revendications précédentes, **caractérisé en ce qu'**à l'étape a), la description de protocole (12, 12a) soit comprimée en vue du temps nécessaire à son exécution et/ou des étapes de calcul nécessaires à son exécution

8. Procédé selon la revendication 7, **caractérisé en ce que** la description de protocole (12, 12a) est comprimée grâce à une ou plusieurs des étapes suivantes:
- regroupement d'éléments de protocole de la description de protocole pertinents en vue de la tâche de mesure; et/ou
- regroupement de dépendances et/ou de conditions; et/ou
- insertion d'au moins une instruction de saut dans la description de protocole, l'instruction de saut étant formulée telle qu'au moins une partie consécutive de la description de protocole pertinente en vue de la tâche de mesure soit sautée; et/ou
- insertion d'une instruction d'arrêt au cas où tous les éléments de protocole de la description de protocole pertinents auraient été décodés.

9. Procédé selon l'une des revendications précédentes, **caractérisée en ce que** la modification de la description de protocole (12, 12a, 12b) est effectuée automatiquement, notamment au moment de la configuration de la tâche de mesure.

10. Procédé selon la revendication 9, **caractérisé en ce que** la modification automatique de la description de protocole comprend les étapes partielles suivantes:
a1) analyse de la tâche de mesure;
a2) détermination de celles des parties de la description de protocole pertinentes en raison de dépendances décrites dans la description de protocole en vue de la tâche de mesure;
a3) modification de la description de protocole grâce à l'exécution d'une ou de plusieurs étapes partielles de la revendication 8.

11. Procédé selon la revendication 9, **caractérisé en ce que** la modification automatique de la description de protocole comprend les étapes partielles suivantes:
a1) analyse de la tâche de mesure;
a2) détermination d'au moins une condition de filtrage par laquelle il faut étendre la description de protocole;
a3) modification de la description de protocole par suite de l'insertion de l'au moins une condition de filtrage déterminée à l'étape a2) dans la description de protocole.

12. Procédé selon l'une des revendications précédentes, **caractérisé en ce que** préalablement à la modification de la description de protocole, il y a exécution d'une étape de sélection d'au moins une tâche de mesure.

13. Procédé selon la revendication 12, **caractérisé en ce que** l'étape de sélection se fait par commande par dialogue, notamment par l'introduction de spécifications de la tâche de mesure par un opérateur dans un menu de sélection.

14. Procédé selon l'une des revendications précédentes, **caractérisée en ce que** la description de protocole modifiée est stockée notamment provisoirement pour l'exécution de la tâche de mesure et que la description de protocole originale est stockée à demeure dans l'analyseur de protocole pour qu'elles puissent être modifiées en vue de l'exécution d'autres tâches de mesure.

15. Procédé selon la revendication 14, **caractérisé en ce que** la description de protocole modifiée est stockée à demeure dans l'analyseur de protocole.

16. Analyseur de protocole prévu au décodage de données (14) codées selon une description de protocole (12) destiné à exécuter une tâche de mesure, l'analyseur de protocole comprenant une entrée pour l'introduction de données (14), un dispositif de décodage (10) pour décoder les données ainsi qu'un dispositif de traitement (20) des données décodées, **caractérisé en ce que**:
l'analyseur de protocole comprend par ailleur un dispositif (15a, 15b) de modification au moins partiellement automatique de la description de protocole en vue de la tâche de mesure, le dispositif de décodage (10) étant conçu pour décoder les données (14) par traitement séquentiel de la description de protocole modifiée (12a).
